# EUROPEAN PATENT SPECIFICATION

(11) **EP 1 658 796 B1**
(45) Date of publication and mention of the grant of the patent: **10.09.2008**
(21) Application number: 05024043.1
(22) Date of filing: 16.11.2005
(51) Int. Cl.: A47J 31/40, B65D 81/00, A47J 31/44

(54) **Coffee machine and method for producing a hot drink**
Kaffeemaschine und Verfahren zum Herstellen von warmen Getränken
Machine à café et procédé de préparation d'une boisson chaude

(30) Priority: 18.11.2004 EP 04027386
(43) Date of publication of application: 24.05.2006
(60) Divisional application: 08157995.5
(73) Proprietor: Press Unique B.V., 3512 NK Utrecht (NL)
(72) Inventor: Evgi, Ram, Tel Aviv 61130 (IL)
(74) Representative: Eisenführ, Speiser & Partner

(56) References cited:
- EP-A- 0 344 541
- EP-A- 0 607 759
- EP-A- 0 913 111
- US-A- 3 589 272
- US-A- 4 644 856
- US-A- 5 010 221
- US-A- 5 049 713
- US-A- 5 300 308
- US-A- 5 638 740
- US-A1- 2003 079 612
- US-A1- 2003 096 038
- US-A1- 2003 131 735
- US-A1- 2003 159 589

## Description

Invention related to a coffee machine and/or a method for producing a hot drink on the basis of coffee or tea. Lots of coffee machines and methods for producing coffee or tea are well known in the state-of-the-art, unfortunately the quality of those hot drinks is not all the time as desired and required from the customers.

Sometimes also the usage and operability is not well engineered, such as that the individual consumer is unable to make its own coffee or tea drink in a simple and inexpensive way and even the best coffee machine is unable to make an excellent coffee or tea, if the water used for the hot drink is suboptimal such that the taste of the hot drink is not that what is desired by the consumer, and the taste is also negatively influenced by the effects of the physical contacts between the ingredients and the producing elements.

Some operations in preparing hot drinks like espresso or cappuccino are well known but still difficult to perform in the desired way. For example, in all traditional espresso machines, that use the traditional "porta filters", according to the rules of preparing the espresso, the dose of the fresh grounded coffee, that is being charged on the filter is needed to be packed and tamped, before engaging the "porta filter" to the machine espresso brewing group. Most espresso professional grinders featured a fixed or telescopic tamper. Professional "barista" are usually tamping with their hand operated preferably tamper. The tamping is traditionally done by applying hand force towards the coffee packed in the filter.

The amount of force the "barista" is applying on the coffee has a major effect on the quality of the espresso brewed. For most espresso professional grinders the amount of force depends mainly on the user operating the machine and thus the constant, necessary pressure is hard to obtain, resulting in loss of the quality of the espresso brewed.

Additionally, many hot drinks like coffee drinks, especially cappuccino, depends on the quality of the milk froth. Espresso machines are mostly equipped with at least one steam wand, operated by a mechanical or electrical valve, for frothing milk. It is important for the taste of the hot drink to be prepared, to heat the milk using the steam but it is also important to avoid overheating of the milk. As known in the state of the art, the temperature and thus the quality of the milk froth depends mainly on the experience of the person operating the steam wand, e.g. the "barista". Some "barista" use a dial thermometer inside the milk pitcher for having an idea about the milk temperature. But still, it is difficult to obtain a constant quality of the milk froth.

Thus, the object of the invention is to improve coffee machines in general and the method for producing coffee or tea hot drinks such that the user at all times has a product which has an extremely high quality.

It is also desirable, to provide the same pressure for tamping all the time in the same given coffee grinding stage, to obtain the perfect and the ultimate extracting time and efficiency, as far as possible.

Document US-2003/0096038 discloses a tamping device.

For achieving good tamping of an ingredient, especially grounded coffee for producing a hot drink, especially espresso, a tamping device is used, which comprises a piston with a tamper whereby the piston is actuated by steam. The tamper fulfils the tamping and/or packing of grounded coffee. Therefore, considering that a certain amount of steam pressure is present the force of the tamper on the grounded coffee can directly be controlled by the pressure of the steam. One particular advantage of using steam for actuating the tamper is the fact, that all known espresso machines use steam for brewing the coffee. This steam needs to have a certain pressure e.g. at least 0.9 bar and thus steam of the same source can also be used to actuate the tamper. Additionally, steam can easily be guided using a tube or a house. The constant pressure of the steam needed for brewing the espresso can also provide an almost constant pressure force of a tamper being applied onto the grounded coffee.

The water pressure driven piston can be sourced by the water supply by the city net or by the espresso machine pump. The espresso machine pump can be built as a rotary pump or a vibration pump or as a pump that is actuated by any other methods.

If the tamper is provided with a wave-like structure on the surface for tamping the grounded coffee, the grounded and tamped coffee will also receive a wave-like surface. In comparison to a flat surface the wave-like surface is larger, even though having the same cross-section dimension. This enlarged surface of a tamped coffee can increase the quality of the brewed espresso.

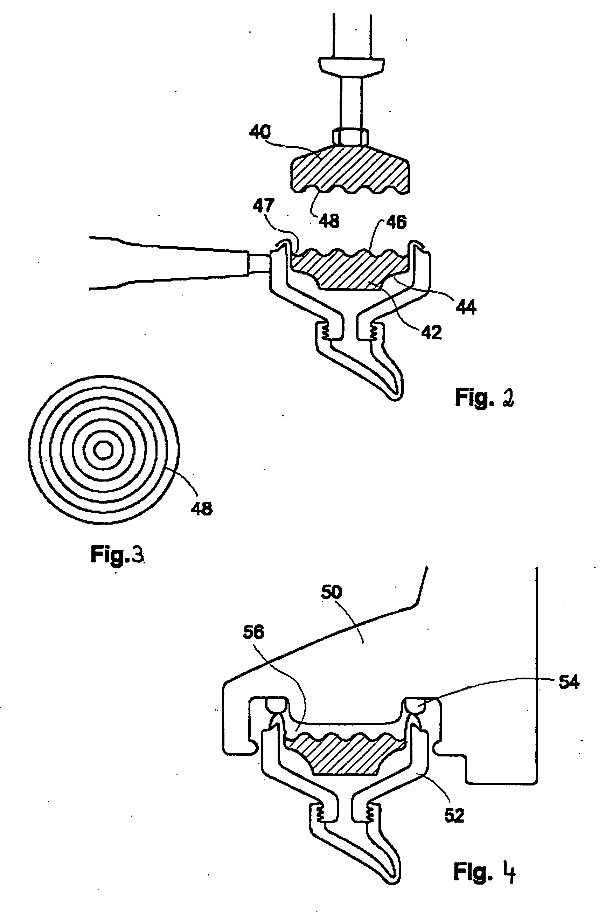

The tamping tip, (the plate that is pressing directly the coffee) is shaped in a wavy profile (Fig. 3), (providing a larger surface on the top side of the packed coffee, creating a round rim of coffee (Fig. 2), sealing the coffee edge with the filter wall, preventing water from passing around the packed coffee among the wall.

A tamping device comprising a steam supply for supplying steam can not only provide steam for actuating the tamper and thus ensuring a good tamping action with nearly constant tamping force, but also provide a steam for other applications as e.g. the brewage of the hot drink. For such a device the level of the pressure for applying to the tamper can be controlled by using a pressure regulator. One possibility is, to provide a steam supply having a higher pressure than needed to actuate the tamper. The pressure regulator will then cut down the high pressure level of the steam supply to the desired level for actuating the tamper. As a result, the steam of the steam supply, having a fairly high pressure level can still be used for other applications, which might need a higher pressure level, than the tamper needs. Also does a variation in the level of the pressure of the pressure supply not influence the pressure of the steam being applied to the tamper. Additionally, the steam pressure needed for the tamper might be adjusted by adjusting the pressure regulator. An adjustment can be fulfilled regardless of the pressure of the steam supply.

The tamping action might be initiated by a switch, especially a micro switch. Such a switch can be operated manually, but it is also possible, to fulfil an automatic or partly automatic actuating of the tamper e.g. mechanically or electronically. One possibility is, to initiate the tamping action when a filter filed with grounded coffee is put in its place in the tamping device by initiating, e.g. pushing, the switch to start the tamping action. This tamping action can thereby be started, by opening a valve, which might be part of the pressure regulator, to supply a steam to the tamper. After tamping, the steam can either be disposed using hoses, or the steam might just as well be discharged into the atmosphere in case such a steam smell is wanted.

In further preferred embodiments a piston type actuator, driven by the steam source that is already available in every traditional espresso machine, is mounted onto the machine. On the bottom tip of the piston a suitable tamper is mounted. Against the piston type tamper is the porta filter "resting bracket", this to make sure the tamping is packing the coffee in the filter properly.

The piston is activated by the steam generated in the machine boiler, while resting the "porta filter" on it's bracket for tamping, the piston will pack and tamp the coffee.

This action can happen by a micro switch that is reading the filter under the tamper, by operating a mechanical or electrical valve manually by the "barista".

Since the pressure in the boiler has some tolerance, a pressure regulator is need to be on the line that is providing the steam to the piston, this feature will obtain operation on fixed pressure regardless to the other steam and energy consumers in the machine.

The steam amount that is discharging from the piston, at the end of the tamping can be discharge to the atmosphere, adding some "Coffee ceremony value" to the coffee bar atmosphere. It can be also discharge directly to the machine connected drain hose, keeping it clean from his tendency to clogged off by coffee powder and milk/coffee fat.

Further preferred features of the invention are:

A steam driven piston, for tamping the coffee before extracting. Water pressure driven piston, sourced by the water supplied by the city net or by the espresso machine pump rotary/vibration or any other method. Piston type tamper mounted on the machine/grinder/independently or anywhere else, to serve the "barista". "Energy" for operating the piston type tamper can be sourced by machine or as an independent group/source. Operation of the piston type tamper can be done manually, automatically, mechanically or electronically.

For heating and or frothing milk a device according to claim 6 is proposed. Especially for frothing milk, the temperature of the milk is important for achieving to reach a good quality of the milk froth. Therefore, the proposed thermostat can be used to control the temperature of the milk. One possibility is, to connect the thermostat operatively to the valve to control the flow of steam through the valve. E.g. the steam flow and thus the supply of steam to the milk to be heated can electronically be controlled. The control can especially be accomplished, by terminating the flow of steam through the valve, when the desired temperature of the milk is reached. This kind of control is very easy and thus is not expensive to realize.

One possibility to operate the device for heating and/or frothing is to provide an operating switch. By pressing the steam operating switch, the steam will start to work on the milk in the pitcher. When the milk has got to the desired temperature, the thermostat is changing its polarity, this can be used for shutting the steam electric valve, or activating a buzzer, lamp, temperature display or any other indication feature.

Thus, an other way to fulfil the controlling of the milk temperature is by operatively connecting the thermostat to a signal device for indicating if the milk has reached the desired temperature. The signal device might be e.g. an optical indicator as a lamp or a buzzer or the like to provide an acoustical signal. A further possibility is, to provide the direct controlling, like terminating the flow of steam through the valve and additionally giving a signal indicating, that the milk has reached the desired temperature.

if the device for heating is formed as a wand, as known by regular machines for preparing a cappuccino, the thermostat can be mounted at this wand closed to an outlet for the steam. In this case, the thermostat is also in the milk, or either the milk is heated by applying steam by this wand. An advantages, that the device for heating milk can be combined to many containers like pitchers containing the milk. Thus, the milk pitcher does not need to be adapted for the device for heating milk.

The thermostat can generally be mounted in any of the parts that have a direct contact with the froth milk. This can be in the pitcher, on the steam wand, on the tube that is collecting the milk from the pitcher to the cappuccinator, or at any other part in any given configuration.

An alternative solution is, to use a device for heating milk according to claim 18. In this example, a milk container especially a pitcher for containing the milk comprises a steam adapter, which is especially mounted in its bottom. Additionally, a steam nozzle for providing steam fits to the steam adapter of the milk pitcher for operatively connecting the milk container to the steam nozzle. One possibility is, to have a steam nozzle which is in a basically vertical position when being in use and the milk pitcher is just positioned over the steam nozzle in a way, that the steam nozzle connects to the steam adapter. For heating and/or frothing the milk the steam flows from the steam nozzle through the steam adapter into the milk container. In the milk container one or more steam jets may be operatively connected to the steam adapter, so the steam can further flow from the steam adapter through the steam jets and from there into the milk. The advantages are, that there is no wand, to be operated. The milk pitcher can just be filled with milk, placed on the steam nozzle and after the process of frothing and/or heating the milk, the milk pitcher can just be taken of this steam nozzle and the milk can be poured into a coffee cup or the like, as desired. This operation can be fulfilled with one single hand.

According to one preferred embodiment the device for heating and/or frothing milk is designed as an auto shut off milk steamer as follows. The steam nozzle is positioned at the base of the machine, from bottom pointing to up. This allows placing the milk pitcher on top of it, engaging the steam nozzle from the machine to the steam jet located firmly in the pitcher. Opening the steam, will froth the milk in the pitcher, without any intervention of the operator once milk will reach the selected temperature, steam delivery will shut off automatically. For dispensing the milk, lift the milk pitcher, disconnecting it from the adapter, the steam port nozzle, by the lifting itself. The thermostat probe is located at the base of the steam group of the machine, reading the actual temperature of the milk in the pitcher from the outside, pitcher is made of food graded metal, with good heat transfer characteristic. The shape of the jet block together with the outer shape line of the pitcher, also the angle of the jets hole is creating the circulation movement of the milk inside the pitcher, obtaining the best texture of the frothed milk.

For such a specially adapted milk container the thermostat or a temperature conducting element to be operatively connected to the thermostat is provided in the wall, especially the bottom wall of the milk container. Thereby, the temperature can directly be measured by the thermostat or can be conducted by the conducting element to the thermostat and thereby control the milk temperature, which then can be fulfilled as described above. Mounting this thermostat with temperature conducting element in the bottom of the milk container has the advantage, that the temperature of the milk can be measured, independently of the amount of milk in the milk container, because the thermostat or the temperature conducting element is always in contact with the milk.

There are many possibilities, to construct the thermostat. An easy way is to use abimetal, which bends, depending on the temperature and can thus actuate a switch or the like. But any other constructions are possible, as for example using a semiconductor connected with a circuit or even a microprocessor. Using a bimetal also offers the opportunity, to directly conduct the movement of this bimetal to actuate the valve, especially open or close the valve.

Further embodiments are: a thermostat that measured the steaming milk temperature, in any kind of steam source, such as espresso machine or independent steam group, in any kind of steam device method such as boiler, thermo block or in line dry steam device. A thermostat, electronic B metal or any other type, controlling the operation of the frothing device, electronically or mechanically, such as traditional steam wand, cappuccinator and such a like. A thermostat is measuring the milk temperature in the pitcher, by being mounted in any of the parts that have a direct contact with the frothed milk, can be in the pitcher, on the steam wand, on the tube that is collecting the milk from the pitcher to the cappuccinator, this or any other part in any given configuration. A thermostat that is controlling the operation of the steam valve, for set point temperature shut off, activating a buzzer, lamp or temperature display, this configurations can be combined or individually appear.

According to the inventional concept for an Espresso coffee the temperature should be below 95°C all the time, preferably in the range of 86 to 90°C, in particular 88°C for a real Espresso.

A coffee Espresso process means that the fluid, which is brought into contact with the ingredient like coffee powder or Espresso powder, is pressed on the defined pressure, for example 9 bar and with the predefined temperature like e. g. 88°C during a certain time, for example 22 seconds (for 35 centilitre) through the ingredient, which has the predefined amount (for example 7 gram for 35 centilitre Espresso).

The invention is described with reference to the accompanying figures, whereby:

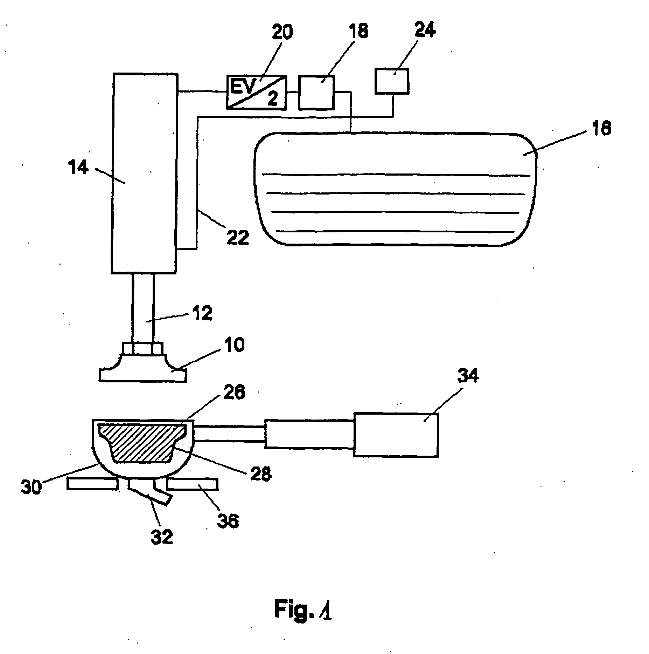

- Figure 1: shows a tamping device in a schematic view;
- Figure 2: a filter with a tamper in a sectional view;
- Figure 3: a bottom view of a tamper tip;
- Figure 4: a further tamping device in a sectional view;
- Figure 5: a device for heating and/or frothing milk in a schematic view; and

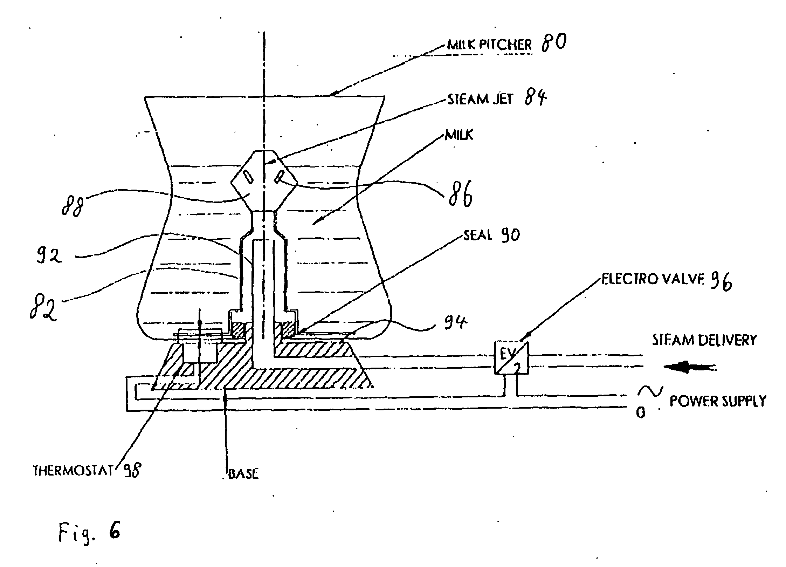

- Figure 6: a further device for heating and/or frothing milk in a partially sectional view.

The tamper 10 is located at one end of the piston 12, which is guided in a cylinder 14 to apply pressure on the piston 12 to actuate the piston and thus on the cylinder in a direction downwards. The steam for fulfilling the movement of the piston is provided by a steam boiler 16 which is connected via a pressure regulator 18 and an electro valve 20 to the cylinder 14. The pressure regulator 18 provides a certain pressure of the steam, whereas the electro valve 20 starts and stops the movement of the piston 12. The steam is used to actuate the movement of the piston 12 and is afterwards discharged through the discharge line 22 and the suppressor 24.

Underneath the tamper is located the grounded coffee 26 which is to be tamped. The grounded coffee is provided in a filter 28, which is held in the filter holder 30. Underneath the filter holder 30 is in orifice 32 through which the brewed coffee is to be discharged in a cup. The filter holder 30 further comprises a handle 34, for holding and carrying the filter. During the process of tamping the filter holder rests in the filter holder rest 36. The filter holder rest also includes a micro switch, to initiate the tamping movement. The micro switch gives a signal to the electro valve 20, when a filter holder 30 is placed on the filter holder rest 36.

One advantageous embodiment of the tamper 20 according to figure 2 provides a wave-like structure on the tip of the tamper 40. Tamping the coffee 42, which is packed in the filter 44 will result in the structure of the tamper tip to appear on the surface 46 of the tampered coffee 42. The structure of the surface of the tip 48 of the tamper 40 comprises of substantially concentrically mounted circles as can be seen in figure 3 The wave-like structure also provides a round rim lip 47 of packed coffee.

After tamping the coffee the filter including the coffee is positioned underneath the machine group 50 for brewing the hot drink, especially the espresso. The filter holder 52 is pressed against a sealing 54 to seal the filter holder 52 against the machine group 50. Because of the tamping of the coffee an infusion chamber 56 has an empty space, which is provided before water is entering for brewing the drink, as can be seen in figure 4.

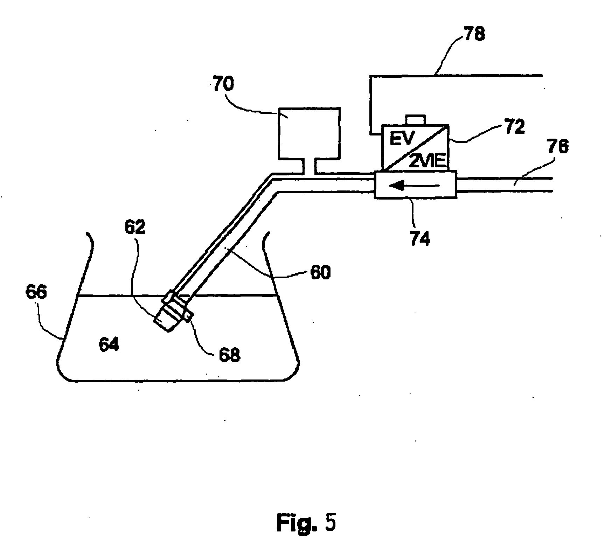

The device for heating and/or frothing milk according to figure 5 comprises of a wand 60 with an orifices 62 which is dipped in milk 64 in the milk container 66. Near the orifice 62 there is located a thermocouple probe 68, which belongs to the thermostat 70 and is connected to the control adapter 72 of the steam valve 74. The steam is provided by a steam supply 76 which delivers the steam to the steam valve 74. The control adapter 72 gets its energy by an electrical supply 78.

When the milk is frothed and/or heated, the steam valve 74 is opened, for example manually opened, to supply steam from the steam supply 76 through the wand 60 and orifices 62 into the milk 64. The thermostat is measuring the milk of the temperature using the thermocouple probe 68 and giving the control adapter 72 a signal to close the steam valve 74, once the temperature of the milk 64 has reached the desired temperature, according to the thermocouple probe.

According an other embodiment a special milk pitcher 80 is provided, which has an adapter 82 in its bottom. The adapter comprises two steam jets 84, which have each an orifice 86 to guide steam in the inside of the milk pitcher. The adapter 82 further comprises a hollow part 88 to which the steam jets 84 are connected. At the bottom of the hollow part 88 is provided a sealing 90 to seal the hollow part 88 of the adapter 82 against a steam nozzle 92, located on a rest platform 94 for resting the pitcher 80. The sealing 90 may be comprises of a viton sealing. The rest platform 94 is part of a machine base, providing the device for heating and/or frothing milk. The steam nozzle 94 is applied by steam via a valve 96. For controlling the temperature of the milk in the milk pitcher 80 a copper quick created temperature thermostat 98, adjusted to 67°C is provided in the bottom of the milk pitcher 80. The thermostat 98 is electrically coupled to the valve 96 to control the flow of steam.

## Claims

1. Tamping device for tamping an ingredient, especially grounded coffee, for producing a hot drink, especially espresso, comprising:
la piston (12) with a tamper (10) and means for actuating the piston (12) by means of steam.

2. Tamping device according to claim 1, comprising a steam supply for supplying steam, whereby the steam supply is provided with a pressure regulator (18).

3. Tamping device according to claim 1 or 2,
**characterized in that** the tamper (10) comprises a surface for tamping the grinded coffee, having a wave-like structure.

4. Tamping device according to any of claims 1-3,
comprising a switch, especially a micro switch, for initiating the tamping action.

5. Machine for producing a hot drink, especially espresso comprising a tamping device according to any of claims 1-4.

6. Machine according to claim 5, further comprising a device for heating and/or frothing milk (64), comprising:
a steam valve (74) for guiding steam to heat the milk (64) and a thermostat (70) for controlling the temperature of the milk (64).

7. Machine according to claim 6,
**characterized in that** the thermostat (70) is operatively connected to the valve (74) to control the flow of steam through the valve (74), especially to terminate the flow of steam through the valve (74), when the desired temperature of the milk (64) is reached.

8. Machine according to claim 6 or 7,
**characterized in that** the thermostat (70) is operatively connected to a signal device for indicating if the milk (64) has reached the desired temperature.

9. Machine according to any of claims 6-8,
**characterized in that** the device for heating is formed as a wand (60), with a thermocouple probe of the thermostat mounted at the wand (60) close to the steam outlet.

10. Machine according to any of claims 6-9, comprising of:
a milk (64) container, especially a pitcher, for containing milk (64) and a steam nozzle for providing steam,
**characterised in that** the milk (64) container comprises a steam adapter, especially in its bottom, for operatively connecting the milk (64) container to the steam nozzle.

11. Machine according to claim 10, comprising of at least one steam jet operatively connected to the steam adapter for providing steam, received from the steam nozzle, to the milk (64).

12. Machine according to claim 10 or 11,
whereby the thermostat (70) or a temperature conducting element to be operatively connected to the thermostat (70) is provided in the wall, especially in the bottom wall of the milk (64) container.

13. Machine for producing of hot drink according to any of claims 5-12,
**characterized in that** the machine comprises a steam source, whereby the steam source is coupled to the piston (12) to provide the steam for actuating the piston (12) and/or whereby the steam source is coupled to the device for heating.

## Patentansprüche

1. Pressvorrichtung zum Pressen einer Zutat, insbesondere gemahlenen Kaffees, zum Herstellen eines heißen Getränks, insbesondere Espresso, umfassend:
einen Kolben (12) mit einem Stempel (10) und Mitteln zum Betätigen des Kolbens (12) mittels Dampf.

2. Pressvorrichtung nach Anspruch 1, umfassend eine Dampfversorgung zum Zuführen von Dampf, wobei die Dampfversorgung mit einem Druckregler (18) versehen ist.

3. Pressvorrichtung nach Anspruch 1 oder 2, **dadurch gekennzeichnet, dass** der Stempel (10) eine Oberfläche zum Pressen des gemahlenen Kaffees aufweist, die eine wellenähnliche Struktur aufweist.

4. Pressvorrichtung nach einem der Ansprüche 1 - 3, umfassend einen Schalter, insbesondere einen Mikroschalter zum Initiieren der Pressbswegung,

5. Maschine zum Herstellen eines heißen Getränks, insbesondere Espresso, umfassend eine Pressvorrichtung nach einem der Ansprüche 1 - 4.

6. Maschine nach Anspruch 5, weiter umfassend eine Vorrichtung zum Erhitzen und/oder Aufschäumen von Milch (64), umfassend:
- ein Dampfventil (74) zum Führen des Dampfs zum Erhitzen der Milch (64)
- und ein Thermostat (70) zum Überwachen der Temperatur der Milch (64).

7. Maschine nach Anspruch 6, **dadurch gekennzeichnet, dass** das Thermostat operativ mit dem Ventil (74) verbunden ist um den Dampfstrom durch das Ventil (74) zu steuern, insbesondere um den Dampfstrom durch das Ventil (74) zu beenden, wenn die gewünschte Temperatur der Milch erreicht ist.

8. Maschine nach Anspruch 6 oder 7, **dadurch gekennzeichnet, dass** das Thermostat (70) operativ mit einer Signalvorrichtung verbunden ist, um anzuzeigen, ob die Milch (64) die gewünschte Temperatur erreicht hat.

9. Maschine nach einem der Ansprüche 6-8, **dadurch gekennzeichnet, dass** die Vorrichtung zum Erhitzen als Stab (60) ausgebildet ist, mit einem Temperaturmessfühler des Thermostat, der an dem Stab (60) in der Nähe des Dampfauslasses angeordnet ist.

10. Maschine nach einem der Ansprüche 6-9, umfassend:
- einen Milchbehälter, insbesondere einen Krug, zum Aufnehmen von Milch (64)
- und einen Dampfstutzen zum Zuführen von Dampf,
**dadurch gekennzeichnet, dass** der Milchbehälter einen Dampfadapter aufweist, insbesondere in seinem Boden, zum operativen Verbinden des Milchbehälters mit dem Dampfstutzen.

11. Maschine nach Anspruch 10, umfassend wenigstens eine Dampfdüse, die operativ mit dem Dampfadapter verbunden ist, um der Milch (64) Dampf zuzuführen, der von dem Dampfstutzen erhalten wurde.

12. Maschine nach Anspruch 10 oder 11, wobei das Thermostat (70) oder ein die Temperatur leitendes Element, das operativ mit dem Thermostat (70) zu verbinden ist, in der Wand, insbesondere in der Bodenwand des Milchbehälters vorgesehen ist,

13. Maschine zum Herstellen eines heißen Getränks nach einem der Ansprüche 5.12,
**dadurch gekennzeichnet, dass** die Maschine eine Dampfquelle aufweist, wobei die Dampfquelle mit dem Kolben (12) verbunden ist, um den Dampf zum Betätigen des Kolbens (12) zuzuführen, und/oder wobei die Dampfquelle mit der Vorrichtung zum Erhitzen gekoppelt ist.

## Revendications

1. Dispositif de tassement pour tasser un ingrédient, spécialement du café moulu, pour produire une boisson chaude, spécialement du café "express", comprenant :
un piston (12) avec un organe de tassement (10) et des moyens pour actionner le piston (12) à l'aide de vapeur.

2. Dispositif de tassement selon la revendication 1, comprenant une alimentation de vapeur pour alimenter de la vapeur, et dans lequel l'alimentation de vapeur est pourvue d'un régulateur de pression (18).

3. Dispositif de tassement selon la revendication 1 ou 2, **caractérisé en ce que** l'organe de tassement (10) comprend une surface pour tasser le café moulu qui présente une structure de forme ondulée.

4. Dispositif de tassement selon l'une quelconque des revendications 1 à 3, comprenant un commutateur, spécialement un microrupteur, pour démarrer l'action de tassement.

5. Machine pour produire une boisson chaude, spécialement du café "express", comprenant un dispositif de tassement selon l'une quelconque des revendications 1 à 4.

6. Machine selon la revendication 5, comprenant en outre un dispositif pour chauffer et/ou faire mousser du lait (64), comprenant :
une valve à vapeur (74) pour guider de la vapeur afin de chauffer le lait (64) et un thermostat (70) pour commander la température du lait (64).

7. Machine selon la revendication 6,
**caractérisée en ce que** le thermostat (70) est fonctionnellement connecté à la valve (74) pour commander l'écoulement de vapeur à travers la valve (74), spécialement pour terminer l'écoulement de vapeur à travers la valve (74) quand la température désirée du lait (64) est atteinte.

8. Machine selon la revendication 6 ou 7,
**caractérisée en ce que** le thermostat (70) est fonctionnellement connecté à un dispositif de signalisation pour indiquer si le lait (64) a atteint la température désirée.

9. Machine selon l'une quelconque des revendications 6 à 8,
**caractérisée en ce que** le dispositif de chauffage est formé comme une paroi (60), avec une sonde à thermocouple du thermostat montée sur la paroi (60) à proximité de la sortie de vapeur.

10. Machine selon l'une quelconque des revendications 6 à 9, comprenant ;
un récipient à lait (64), spécialement un pichet, pour contenir du lait (64), et une buse à vapeur pour fournir de la vapeur,
**caractérisée en ce que** le récipient à lait (64) comprend un adaptateur de vapeur, spécialement dans son fond, pour connecter fonctionnellement le récipient à lait (64) à la buse à vapeur.

11. Machine selon la revendication 10, comprenant au moins un ajutage à vapeur fonctionnellement connecté à l'adaptateur à vapeur pour fournir de la vapeur, reçue depuis la buse à vapeur, vers le lait (64).

12. Machine selon la revendication 10 ou 11,
dans laquelle le thermostat (70), ou un élément thermoconducteur destiné à être fonctionnellement connecté au thermostat (70), est prévu dans la paroi, spécialement dans la paroi de fond du récipient à lait (64).

13. Machine pour produire une boisson chaude selon l'une quelconque des revendications 5 à 12,
**caractérisée en ce que** la machine comprend une source de vapeur, ladite source de vapeur étant couplée au piston (12) pour fournir la vapeur destinée à actionner le piston (12) et/ou ladite source de vapeur étant couplée au dispositif de chauffage.
